# EUROPEAN PATENT APPLICATION

(11) **EP 2 423 601 A1**
(43) Date of publication of application: **29.02.2012**
(21) Application number: 11178243.9
(22) Date of filing: 22.08.2011
(51) Int. Cl.: F23R 3/60

(54) **Combustor liner concentric support and method**

(30) Priority: 24.08.2010 US 862005
(71) Applicant: Nuovo Pignone S.p.A., 50127 Florence (IT)
(72) Inventor: Ghanime, George Hanna, 50127 Florence (IT)
(74) Representative: Illingworth-Law, William Illingworth

(57) **Abstract**

Systems and methods provide for reducing motion which causes wear in a combustor. The method includes attaching a first end of a combustor liner (404) to a retainer (402) which encircles the first end of the combustor liner (404); attaching the retainer (402) to a combustor casing (406), wherein the retainer (402) acts as a spring between the combustor liner (404) and the combustor casing (406); reducing a relative motion between the combustor casing (406) and the combustor liner (404) along a longitudinal axis and a circumferential axis of the combustor liner (404) by the retainer (402); and locating the combustor liner (404) substantially concentrically within the combustor casing (406).

## Description

### TECHNICAL FIELD

The embodiments of the subject matter disclosed herein generally relate to wear reduction and more particularly to wear reduction in combustion hardware of gas turbine systems.

### BACKGROUND

Combustors are used in a gas turbine to deliver hot combustion gases to a first stage of a turbine. Each combustor used in the gas turbine typically includes a fuel injection system with one or more fuel nozzles and a combustion chamber. A typical combustion chamber may include a combustion liner, a transition piece which is connected to and extends between the combustion chamber and the first stage of the turbine, and a flow sleeve. A passage is created between the combustion liner and the flow sleeve which allows at least a portion of a compressor discharge air to be introduced into the combustion liner for mixing with the fuel injected through the fuel nozzles and for cooling purposes. Additionally, the transition piece directs and delivers the hot combustion gases to the first stage of the turbine for power generation and expansion.

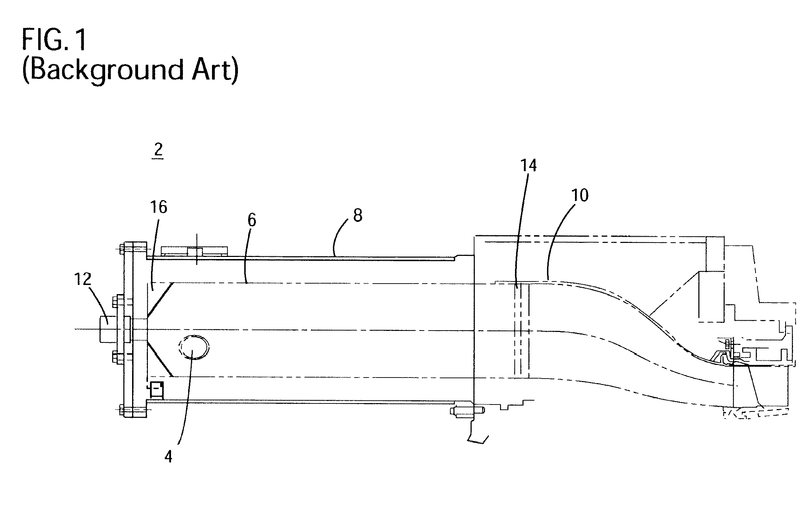

More specifically, a combustor and its associated transition piece are described with respect to Figure 1. A combustor 2 for use in a gas turbine has a combustion chamber 4, which is inside of a combustor liner 6 which may be cylindrical in shape. Fuel enters the combustion chamber 4 and is ignited by a burner 12. Associated with the ignition, there is a cap section 16 (which includes a back plate) for shaping a flame in the combustion liner 6. The combustion liner 6 is surrounded by a substantially cylindrical flow sleeve also known as a combustor casing 8. However, a radial gap exists between the combustor liner 6 and the combustor casing 8 which acts as an air flow passage to introduce air into the combustion chamber 4 to be mixed with delivered fuel. Where a transition piece 10 is connected to the combustion liner 6, a hula seal 14 encircles the end of the combustor liner 6 and makes contact with the transition piece 10. Additionally, the transition piece 10 connects the combustor liner 6 with a first stage of a turbine (not shown).

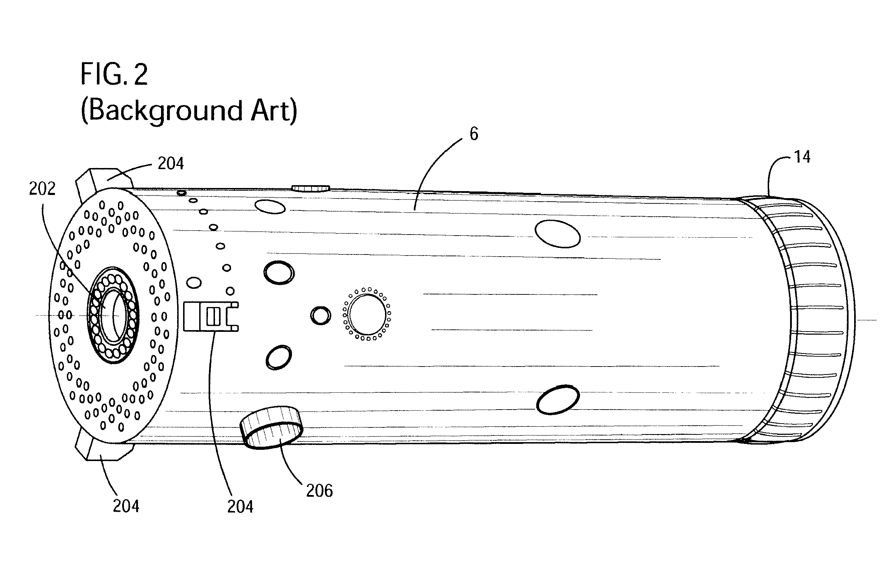

Figure 2 shows a conventional combustor liner 6 in more detail. More specifically, the combustor liner 6 includes a burner collar 202, three casing liner stops 204 and a cross-fire collar 206 (a combustor liner 6 can have more cross-fire collars 206 but only one is shown in Figure 2). More information regarding a combustor for use in a gas turbine can be found in U.S. Patent Number 5,749,218, entitled "Wear Reduction Kit for Gas Turbine Combustors", the entire context of which is incorporated herein by reference.

During operation, some combustion parts are affected by wear induced by, for example, hardware vibrations. Generally, the parts that wear are contact parts associated with various parts of the combustor liner 6. For example, some of the contact parts which become worn over time, when the combustor 2 is in operation, include the burner collar 202, the casing liner stops 204, the hula seal 14, the cross-fire collar 206 and their respective mating parts. As the wear increases on these parts, the gap between the mating parts increases which can cause other wear problems. For example, as the casing liner stops 204 wear, there is more room for the combustor liner 6 to move in an axial or circumferential direction so relative motion between the combustor liner 6 and the combustor casing 8 increases. Also, when this occurs, the hula seal 14 can act as a hinge where it mates with the transition piece 10, in turn causing more specific wear on the hula seal 14, leading to a potential mechanical failure.

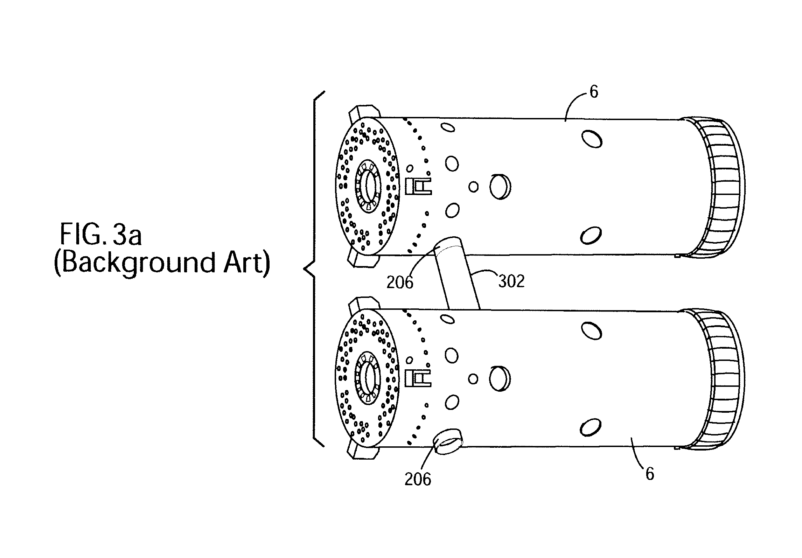

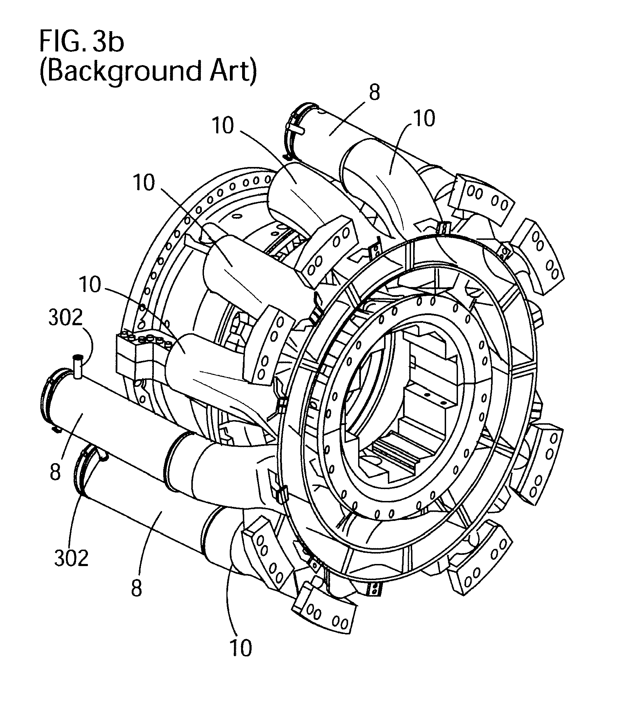

While shown as a single combustor in Figure 1, a typical gas turbine engine will have multiple combustors. Figure 3a shows two combustor liners with a cross-fire tube 302 and Figure 3b shows an arrangement of combustors assembled in a machine. Typically there are twelve combustors 2 (shown in Figure 3b by the various configurations of the combustor casings 8 connected to the transition pieces 10) which are linked to each other by the cross-fire tubes 302 which are the mating piece to the cross-fire collars 206. Cross-fire tubes 302 are used to allow a flame to move into a combustor 2 which has lost its flame which is required for ongoing combustion. So, in a gas turbine engine, there will be multiple combustors 2 which means that there will be more mechanical parts for wear to occur in the gas turbine engine than would be expected from considering a single combustor.

This mechanical wear on the various parts described above generates maintenance and expense costs related to downtime and replacement parts. One method for reducing wear between two mating combustion components in a gas turbine is spray coating. For example, high velocity oxygen fuel (HVOF) coatings have been used to improve the wear characteristics on parts which have been found to have wear damage. These spray coatings, while improving wear characteristics, are not able to provide, or cost effectively provide, a thick coating and instead are typically used in applications of coatings of approximately 0.5 mm or less in thickness. Additionally, these spray coating mechanisms are performed at approximately a 90° angle to the desired coating surface. Some part geometries that it is desirable to coat, e.g., corners and various curves, do not allow for the required inclination (between the coating spray nozzle and the part surface) to be achieved which results in either a thin coating or possibly no coating at all.

Accordingly, systems and methods for reducing wear and increasing the lifetime of parts associated with the gas turbine combustor and reducing costs are desirable.

### SUMMARY

According to an exemplary embodiment there is a method for reducing motion which causes wear in a combustor. The method includes: attaching a first end of a combustor liner to a retainer which encircles the first end of the combustor liner; attaching the retainer to a combustor casing, wherein the retainer acts as a spring between the combustor liner and the combustor casing; reducing a relative motion between the combustor casing and the combustor liner along a longitudinal axis and a circumferential axis of the combustor liner by the retainer; and locating the combustor liner substantially concentrically within the combustor casing.

According to another exemplary embodiment there is a combustor configured for a reduction in wear. The combustor includes: a combustor liner having a first end attached to a retainer which encircles the first end of the combustor liner; a combustor casing, wherein the combustor liner is located substantially concentrically within the combustor casing; the retainer attached to the combustor casing and configured to act as a spring between the combustor liner and the combustor casing; and the retainer configured to reduce a relative motion between the combustor casing and the combustor liner along a longitudinal axis and a circumferential axis of the combustor liner, wherein the retainer includes a first section configured to attach the retainer to an inside of a combustor casing, a second section configured to attach the retainer to an outside surface of a combustor liner and a spring like section configured to substantially concentrically locate the combustor liner within the combustor casing, wherein the spring like section is disposed between the first section and the second section.

According to another exemplary embodiment there is a retainer for substantially fixing in place locations of components within a combustor. The retainer includes: a first section configured to attach the retainer to an inside of a combustor casing; a second section configured to attach the retainer to an outside surface of a combustor liner; and a spring like section configured to substantially concentrically locate the combustor liner within the combustor casing, wherein the spring like section is disposed between the first section and the second section.

According to another exemplary embodiment there is a retainer for substantially fixing in place locations of components within a combustor. The retainer includes: a first section configured to attach the retainer to an inside of a combustor casing; and two sections which when assembled are configured to substantially concentrically locate a combustor liner within the combustor casing, wherein a portion of the two sections is also configured to attach the retainer to an outside surface of the combustor liner

### BRIEF DESCRIPTION OF THE DRAWINGS

The accompanying drawings illustrate exemplary embodiments, wherein:

Figure 1 depicts a combustor and a transition piece;

Figure 2 shows a combustor liner;

Figure 3a shows two combustor liners connected by a cross-fire tube;

Figure 3b shows an arrangement of combustors assembled in a machine;

Figure 4 shows a combustor with a retainer according to exemplary embodiments;

Figures 5 and 6 illustrate angled views of a combustor with the retainer according to exemplary embodiments;

Figure 7 shows a combustor with another retainer according to exemplary embodiments;

Figures 8-10 depicts sections of the retainer with holes for allowing air to pass through the retainer according to exemplary embodiments; and

Figure 11 shows a flowchart for a method of reducing motion which causes wear in a combustor according to exemplary embodiments.

### DETAILED DESCRIPTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

A combustor liner 6 is typically supported by three axial stops 204 on a forward end of the combustor liner 6 and a hula seal 14 on the aft end of the combustor liner 6 (see Figures 1 and 2). The combustor liner stops 204 have a relatively loose clearance with their mating stop on the combustor casing 8, which, due to vibratory motion, erode over time which leads to greater wear and even larger clearances. This allows the combustor liner 6 to move which can put the hula seal 14 in a higher wear position when it begins to act as a hinge between the combustor liner 6 and the combustor casing 8. According to exemplary embodiments, the axial stops 204 on the combustor liner 6 and their mating stops (not shown) on the combustor casing 8 can be removed and replaced by a so called squirrel-cage design or retainer which greatly reduces the relative motion between the combustor casing 8 and the combustor liner 6, which in turn reduces the wear of various associated mating parts as is discussed in more details below.

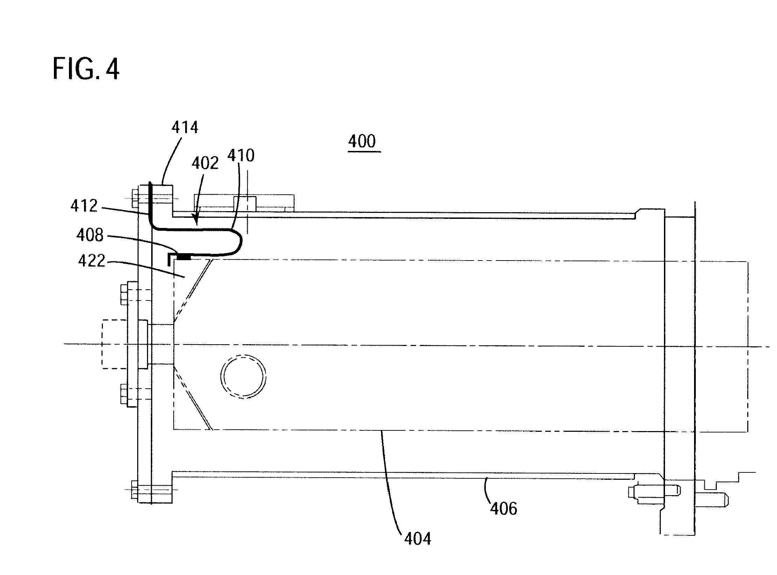

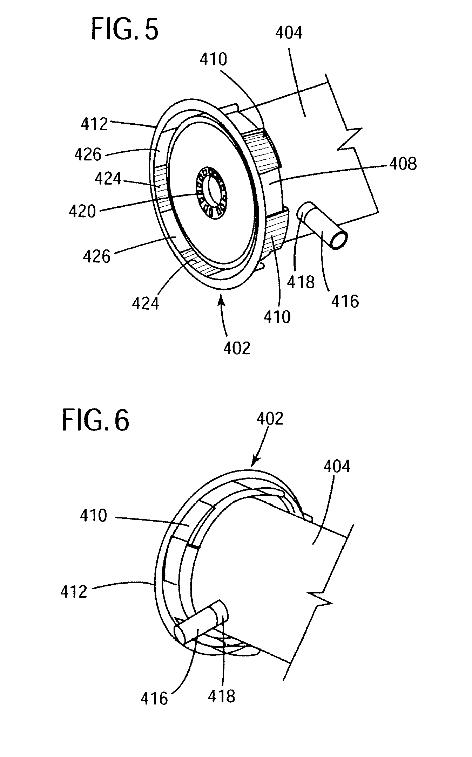

According to exemplary embodiments, a combustor 400 can have a retainer 402 which can attach a combustor liner 404 to a combustor casing 406 as shown in Figures 4-6. The retainer 402 can be a single integrated piece which keeps the combustor liner 404 concentric with the combustor casing 406. The retainer 402 can be made with material which is compatible with the combustor liner material that has properties allowing for ease of manufacturing, welding and assembly while still having the desired material properties to function in the gas turbine environment. Examples of such material include, but are not limited to, a cobalt based alloy, HAST-X, FSX-414 and L-605. The retainer 402, according to one exemplary embodiment, can be considered to have three sections: a section 412 for attaching to the combustor casing 406, a spring-like section 410 and a section 408 for attaching to the outside of the combustor liner 404. The section 412 may be attached to a flange section 414 of the combustor casing 406 by, for example, bolting the section 412 to the flange section 414 of the combustor casing 406. However other attachment methods, such as other mechanical attachment methods and/or welding, may also be used. The section 408 is attached to the combustor liner 404 (and/or the cap section 422) by, for example, welding, riveting, bolting or any other desired method of attachment. The spring-like section 410 can have a predetermined elastic constant. Additionally, as shown in Figure 5, some of the side areas of section 410 will be solid (see, for example, area 424) and some of the side areas of the spring-like section 410 will be cut outs allowing for air flow (see, for example, area 426). The size and shape of the areas 426 can vary as desired. Thus if one were to look through area 426 one would see a portion of section 408.

This design of the retainer 402 relative to both the combustor liner 404 and the combustor casing 406 removes the need for having the axial stops used in a conventional combustor. The retainer 402 reduces or eliminates a longitudinal axial and circumferential motion of the combustor liner 404 with respect to the combustor casing 406 which reduces wear in the various contact points when installed. The spring-like section 410 acts to concentrically locate the combustor liner 404 within the combustor casing which further reduces wear in the various contact points. This reduction in wear will increase the useable life-cycle of combustors. Additionally, according to exemplary embodiments, these retainers can be retrofitted, as desired, onto some currently existing combustors and the axial stops on conventional combustors can be removed.

As described above, according to exemplary embodiments, wear can be reduced in a combustor when using the retainer 402. Some of these contact points which can wear, but now at a reduced rate, are shown in Figures 5 and 6 and include the burner collar 420 and the contact between the cross-fire tube 416 and the cross-fire collar 418 due to the reduction in the longitudinal axial movement. The concentric location of the combustor casing 406 within the combustor liner 404 will reduce the wear between the burner collar 420 and a burner (not shown). This wear reduction within the combustor can extend the useful service lifetime of the combustor. The use of the retainer 402 allows for the design of the combustor to change from a wear regime to a fatigue regime which can lead to other modifications in designing combustor components to take advantage of this design feature.

According to an alternative exemplary embodiment, the retainer 402 can be made from multiple independent subsections, e.g., two subsections, three or more subsections. For example, the subsections 408, 410 and 412 of the retainer 402 can be made independently from each other. These subsections 408, 410 and 412 can then either be assembled prior to being used to attach and concentrically locate the combustor liner 404 to the combustor casing 406 or during that process.

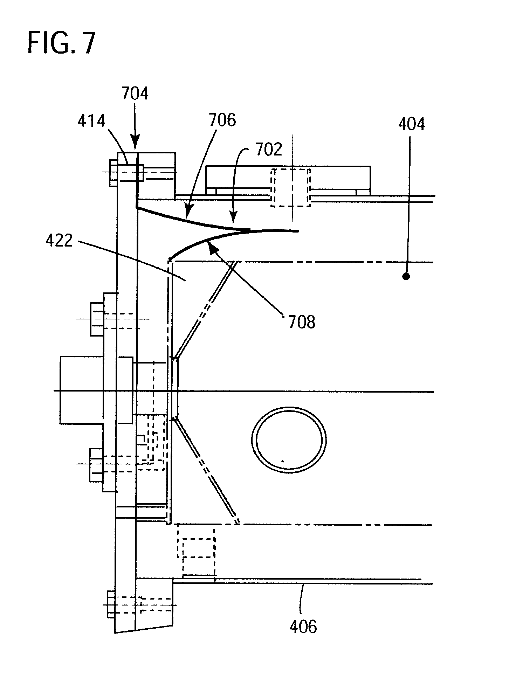

According to exemplary embodiments, another form of the squirrel cage is shown as retainer 702 in Figure 7. The retainer 702, according to one exemplary embodiment, can be considered to have three sections: a section 704 for attaching to the combustor casing 406 and a section 706 which in concert with section 708 act as a spring. Sections 706 and 708 may be convex however, other shapes can also be used. The attached sections 706 and 708 can have a predetermined elastic constant. The section 704 may be attached to the flange section 414 of the combustor casing 406 by, for example, bolting the section 704 to the flange section 414 of the combustor casing 406. However other attachment methods, such as other mechanical attachment methods and/or welding, may also be used. The section 708 is attached to the combustor liner 404 (and/or the cap section 422) by, for example, welding, riveting, bolting or any other desired method of attachment.

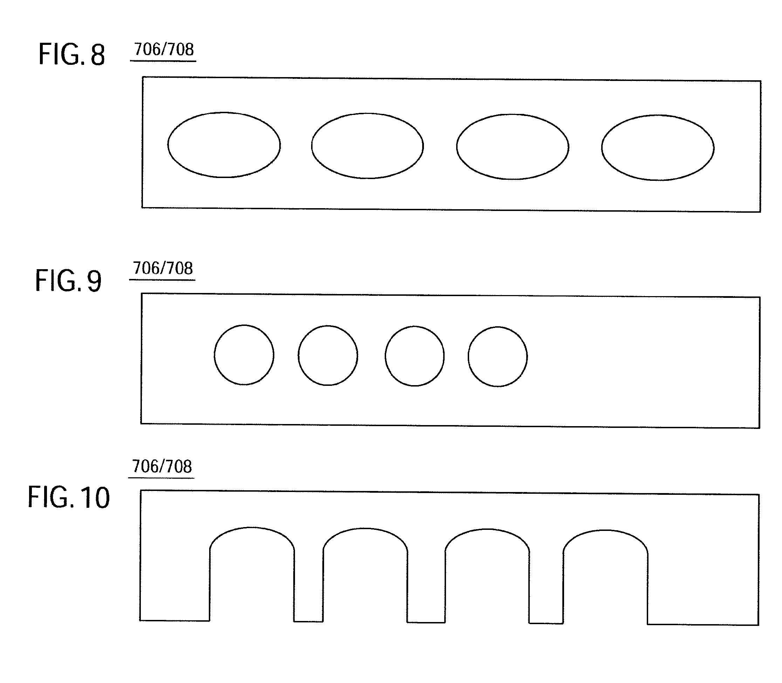

According to exemplary embodiments, Figures 8-10 show various designs for sections 706 and 708 for allowing air to pass through the retainer 702 to promote the desired air flow between the combustor casing 406 and the combustor liner 404. While Figures 8-10 show three possible designs, other shapes and forms for allowing the desired air flow, while maintaining structural integrity and the desired spring-like performance of the retainer 702, are possible. According to one exemplary embodiment, each section 704, 706 and 708 of the retainer 702 is manufactured separately and then assembled by, for example, welding. Additionally, retainer 702 provides similar results as retainer 402 such as a reduction in longitudinal motion, reduction in circumferential motion, removing the need for having the axial stops used in a conventional combustor and wear reduction of wear between mating combustion components. According to exemplary embodiments, for retrofitting, section 708 of the retainer 702 can be welded or bolted to the cap section 422.

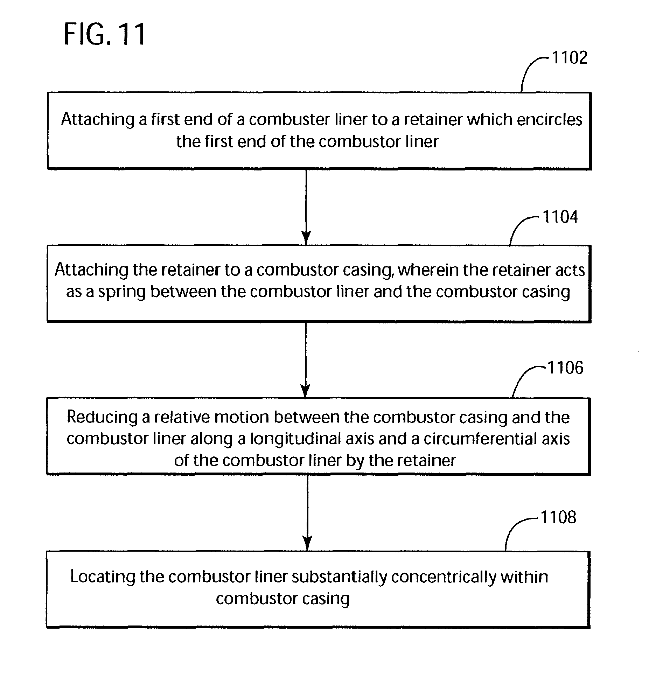

Utilizing the above-described exemplary embodiments, a method for reducing motion which causes wear in a combustor is shown in the flowchart of Figure 11. The method includes: at step 1102 attaching a first end of a combustor liner to a retainer which encircles the first end of the combustor liner; at step 1104 attaching the retainer to a combustor casing, wherein the retainer acts as a spring between the combustor liner and the combustor casing; at step 1106 reducing a relative motion between the combustor casing and the combustor liner along a longitudinal axis and a circumferential axis of the combustor liner by the retainer; and at step 1108 locating the combustor liner substantially concentrically within the combustor casing.

The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope and spirit of the present invention as defined by the following claims. No element, act, or instruction used in the description of the present application should be construed as critical or essential to the invention unless explicitly described as such. Also, as used herein, the article "a" is intended to include one or more items.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other example are intended to be within the scope of the claims if they have structural elements that do not differ from the literal language of the claims, or if they include equivalent structural elements within the literal languages of the claims.
Various aspects and embodiments of the present invention are defined by the following numbered clauses:
1. A method for reducing motion which causes wear in a combustor (400), the method comprising:
   attaching a first end of a combustor liner (404) to a retainer (402) which encircles the first end of the combustor liner (404);
   attaching the retainer (402) to a combustor casing (406), wherein the retainer (402) acts as a spring between the combustor liner (404) and the combustor casing (406);
   reducing a relative motion between the combustor casing (406) and the combustor liner (404) along a longitudinal axis and a circumferential axis of the combustor liner (404) by the retainer (402); and
   locating the combustor liner (404) substantially concentrically within the combustor casing (406).
2. The method of clause 1, wherein the retainer is configured to allow a flow of air through the retainer.
3. The method of clause 1 or clause 2, wherein holes are located in a spring-like section of the retainer.
4. The method of any preceding clause, wherein the spring-like section has a predetermined elastic constant.
5. The method of any preceding clause, wherein the retainer is manufactured as a plurality of pieces which are assembled together.
6. The method of any preceding clause, wherein the step of attaching the retainer to the combustor casing is performed by bolting the retainer to the combustor casing.
7. The method of any preceding clause, wherein the combustor liner does not include three axial stops on an outer surface of the combustor liner.
8. A combustor (400) configured for a reduction in wear, the combustor (400) comprising:
   a combustor liner (404) having a first end attached to a retainer (402) which encircles the first end of the combustor liner (404);
   a combustor casing (406), wherein the combustor liner (404) is located substantially concentrically within the combustor casing (406);
   the retainer (402) attached to the combustor casing (406) and configured to act as a spring between the combustor liner (404) and the combustor casing (406); and
   the retainer (402) configured to reduce a relative motion between the combustor casing (406) and the combustor liner (404) along a longitudinal axis and a circumferential axis of the combustor liner (404), wherein the retainer (402) includes a first section (412) configured to attach the retainer (402) to an inside of the combustor casing (406), a second section (408) configured to attach the retainer (402) to an outside surface of the combustor liner (406) and a spring like section (410) configured to substantially concentrically locate the combustor liner (406) within the combustor casing (404), wherein the spring like section (410) is disposed between the first section (412) and the second section (408).
9. The combustor of clause 8, wherein the retainer is configured to allow a flow of air through the retainer.
10. The combustor of clause 8 or clause 9, wherein the spring-like section has a predetermined elastic constant.
11. The combustor of any of clauses 8 to 10, wherein the retainer is manufactured as a single piece.
12. The combustor of any of clauses 8 to 11, wherein the retainer is manufactured as a plurality of pieces which are assembled together.
13. The combustor of any of clauses 8 to 12, wherein the retainer attached to a combustor casing is performed by bolting the retainer to the combustor casing.
14. The combustor of any of clauses 8 to 13, wherein the combustor liner does not include three axial stops on an outer surface of the combustor liner.
15. A retainer (402) for substantially fixing in place locations of components within a combustor (400), the retainer (402) comprising:
   a first section (412) configured to attach the retainer (402) to an inside of a combustor casing (406);
   a second section (408) configured to attach the retainer (402) to an outside surface of a combustor liner (406); and
   a spring like section (410) configured to substantially concentrically locate the combustor liner (406) within the combustor casing (404), wherein the spring like section (410) is disposed between the first section (412) and the second section (408).
16. The retainer of clause 15, wherein the retainer fully encircles the combustor liner.
17. The retainer of clause 15, wherein the retainer is manufactured as a plurality of pieces which are assembled together.
18. The retainer of any of clauses 15 to 17, wherein the retainer is configured to allow a flow of air through the retainer.
19. A retainer (702) for substantially fixing in place locations of components within a combustor (400), the retainer (702) comprising:
   a first section (704) configured to attach the retainer (702) to an inside of a combustor casing (406); and
   two sections (706 and 708) which when assembled are configured to substantially concentrically locate a combustor liner (406) within the combustor casing (404) and wherein a portion of the two sections is also configured to attach the retainer (702) to an outside surface of the combustor liner (406).
20. The retainer of clause 19, wherein the two sections which when assembled are configured to substantially concentrically locate a combustor liner within the combustor casing are each convex.

## Claims

1. A method for reducing motion which causes wear in a combustor (400), the method comprising:
attaching a first end of a combustor liner (404) to a retainer (402) which encircles the first end of the combustor liner (404);
attaching the retainer (402) to a combustor casing (406), wherein the retainer (402) acts as a spring between the combustor liner (404) and the combustor casing (406);
reducing a relative motion between the combustor casing (406) and the combustor liner (404) along a longitudinal axis and a circumferential axis of the combustor liner (404) by the retainer (402); and
locating the combustor liner (404) substantially concentrically within the combustor casing (406).

2. The method of claim 1, wherein the retainer is configured to allow a flow of air through the retainer.

3. The method of claim 1 or claim 2, wherein holes are located in a spring-like section of the retainer.

4. The method of any preceding claim, wherein the spring-like section has a predetermined elastic constant.

5. The method of any preceding claim, wherein the retainer is manufactured as a plurality of pieces which are assembled together.

6. The method of any preceding claim, wherein the step of attaching the retainer to the combustor casing is performed by bolting the retainer to the combustor casing.

7. The method of any preceding claim, wherein the combustor liner does not include three axial stops on an outer surface of the combustor liner.

8. A combustor (400) configured for a reduction in wear, the combustor (400) comprising:
a combustor liner (404) having a first end attached to a retainer (402) which encircles the first end of the combustor liner (404);
a combustor casing (406), wherein the combustor liner (404) is located substantially concentrically within the combustor casing (406);
the retainer (402) attached to the combustor casing (406) and configured to act as a spring between the combustor liner (404) and the combustor casing (406); and
the retainer (402) configured to reduce a relative motion between the combustor casing (406) and the combustor liner (404) along a longitudinal axis and a circumferential axis of the combustor liner (404), wherein the retainer (402) includes a first section (412) configured to attach the retainer (402) to an inside of the combustor casing (406), a second section (408) configured to attach the retainer (402) to an outside surface of the combustor liner (406) and a spring like section (410) configured to substantially concentrically locate the combustor liner (406) within the combustor casing (404), wherein the spring like section (410) is disposed between the first section (412) and the second section (408).

9. The combustor of claim 8, wherein the retainer is configured to allow a flow of air through the retainer.

10. The combustor of claim 8 or claim 9, wherein the spring-like section has a predetermined elastic constant.

11. The combustor of any of claims 8 to 10, wherein the retainer is manufactured as a single piece.

12. The combustor of any of claims 8 to 11, wherein the retainer is manufactured as a plurality of pieces which are assembled together.

13. The combustor of any of claims 8 to 12, wherein the combustor liner does not include three axial stops on an outer surface of the combustor liner.

14. A retainer (402) for substantially fixing in place locations of components within a combustor (400), the retainer (402) comprising:
a first section (412) configured to attach the retainer (402) to an inside of a combustor casing (406);
a second section (408) configured to attach the retainer (402) to an outside surface of a combustor liner (406); and
a spring like section (410) configured to substantially concentrically locate the combustor liner (406) within the combustor casing (404), wherein the spring like section (410) is disposed between the first section (412) and the second section (408).

15. A retainer (702) for substantially fixing in place locations of components within a combustor (400), the retainer (702) comprising:
a first section (704) configured to attach the retainer (702) to an inside of a combustor casing (406); and
two sections (706 and 708) which when assembled are configured to substantially concentrically locate a combustor liner (406) within the combustor casing (404) and wherein a portion of the two sections is also configured to attach the retainer (702) to an outside surface of the combustor liner (406).
